# EUROPEAN PATENT APPLICATION

(11) **EP 2 837 968 A1**
(43) Date of publication of application: **18.02.2015**
(21) Application number: 13180423.9
(22) Date of filing: 14.08.2013
(51) Int. Cl.: G03B 21/28, G03B 21/62, H04N 9/31, G02B 13/00, G03B 11/00, G03B 21/13, G03B 37/04

(54) **Projector and display system comprising same**

(71) Applicant: BARCO N.V., 8500 Kortrijk (BE)
(72) Inventor: Vermeirsch, Koenraad, B-8510 Bellegem (BE); Defever, Rik, B-8500 Kortrijk (BE); Gerets, Peter, B-8800 Roeselare (BE)
(74) Representative: IPLodge bvba

(57) **Abstract**

The invention pertains to a projector comprising an optical engine 50, a projection lens 60, a means for light deviation 70, and an afocal lens system 80, wherein the projector has a total throw ratio between 0.7 and 0.8. Such a projector can be used to build a very compact and cost-effective back-projection system. The invention also pertains to a projection assembly comprising such a projector, followed by a means for light gradation 90 and a front-surface mirror 30. The invention also pertains to a display system comprising at least one such projection and a display screen 20.

## Description

The invention concerns a compact rear projector system involving blending and displaying high resolution images.

Rear projection systems have an advantage over front projection systems since they can provide better contrast independently of the environmental light conditions. By controlling the balance between transmissive screen gain and reflective screen gain, displays can be fabricated with very good ANSI (American National Standards Institute) contrast properties in poor ambient light conditions. This is also a technique to create large area displays or screens. A large image can be composed by letting several projectors provide a subpart of the image. Between the sub-images there will be an overlap between the images, the so-called blend region. It is of outmost importance that the projection system is designed so that the blend region is not visible for the viewer. There are various ways to achieve a good blend, one example is to use a light gradient filter for each projector which results in a homogeneous brightness profile across the overlap.

In rear projection, the projectors and supporting optics are put on the backside of the display screen and all space behind the display screen is lost. Thus it is of interest to make these devices extend as little as possible behind the display screen and decrease the system depth. It is further of interest that this system can be built with inexpensive devices, for example COTS (commercial off-the-shelf) components.

The throw ratio describes the distance between a projector and a screen for projection of a sharp image of a certain area on the screen. Thus, a way to lower the system depth would be to use a projector with a short throw ratio. However, short throw ratios give a high brightness roll-off towards the rim of the image, especially in the corners of a rectangular image. The inhomogeneous brightness distribution will lead to a bad blend quality. The system also becomes inefficient since a large part of the light is wasted. US7334901 gives an example of a rear-projection system depth with a short throw ratio. This solution would give a less deep projection system, but the brightness roll-off would be too high for a system involving image blending.

Another way to decrease the extension of an optical path is to use front surface mirrors that folds the optical path. When several projectors are used, each projector projects a sub-part of an image. A set-up with several projectors and front surface mirrors will result in a three-dimensional pattern with edges of light beams and mirrors. Between these edges there will be a non-lit volume which is narrowing down in the direction towards the display screen. If the projector system does not fit within this volume, its distance to the display screen has to be increased and the display system depth increases. The output lumen of a current micro-projectors, e.g. a pocket projector, is sufficient to give a good image quality. However, a standard projector housing has the shape of a flattened cube with two sides of close to square dimensions. This shape will not efficiently fit the available volume which has a triangular cross section.

Accordingly, an aim of preferred embodiments of the present invention is to provide a rear projection system with high blend quality and low system depth, and to implement this with low-cost components.

In the present text the "optical engine" is defined as a unit that includes illumination and image formation but where no optical power is yet added, thus the image formed is much smaller than the finally projected image. The illumination can be internal or fed from an external source via a fibre.

According to the present invention, there is provided a projector comprising an optical engine followed by a projection lens, a means for light deviation and an afocal lens system. The inventors have discovered that the components should be chosen so that the projector has a total throw ratio between 0.7 and 0.8. This limits the brightness roll-off to maximum 20% so that a high blend quality is preserved and the system is energy efficient. This will also allow the system to be less deep than conventional rear-projection systems. Further, the optical engine may output at least 150 lumens. This choice leads to good image and blend quality. The means for light deviation could be e.g. a mirror or a prism, which deviates the light from its optical path towards the folding mirror between 45 and 70 degrees. An afocal lens system is put after the means for light deviation, this could for example be a photographic lens, e.g. a low-cost conversion lens. The conversion lens can further shorten the distance to the screen since it will magnify the image without distorting it.

According to an embodiment of the projector of the present invention, the light source could be connected to the rest of the system with an optical fiber. By keeping the light source on another location, the occupied volume behind the display screen is further decreased.

According to an embodiment of the projector of the present invention, the components of the optical engine could be aligned along one axis. This will make the projector extend primarily in one dimension.

According to an aspect of the present invention, there is provided a projection assembly comprising a projector as described above followed by a means for light gradation and a front-surface mirror. Preferably, the projector substantially extends along a direction parallel to the plane of the projected image; and the projector, the means for light gradation, and the front-surface mirror are shaped and arranged in such a way as to leave open a space which could be occupied without interference by a similar projection assembly in an image-blending configuration. Thus, there is provided a space capable of at least partially receiving an adjacent projection assembly without interference between the respective projector components and the lightbeams of their respective neighbors, in an arrangement where the display screen is placed very close to (i.e., in or nearly in contact with) the front part of the front-surface mirror. The present description discloses configurations of a projection assembly wich allow for placing additional projection assemblies adjacent to it in a very compact way, so as to obtain an extremely compact and thin image blending back-projection system; in particular, when regarded from the direction of the projection surface, parts of one projection assembly may be arranged behind the front-surface mirror of an adjacent projection assembly. The skilled person will appreciate that variations of the disclosed configurations that obtain the same effect and are also within the scope of the present invention are also possible. Preferably, spaces for receiving adjacent projectors are provided in two directions, preferably orthogonal directions, such that a two-dimensional stack of projectors can be created.

According to another aspect of the present invention there is provided a projection system comprising at least one of the above described projection assemblies and a display screen. The means for light gradation will assure a correct brightness level in the overlap area. The means for light gradation could be an optical blend filter, for example a gradient neutral density filter, which has no internal pattern, to avoid diffraction. The front-surface mirror or folding mirror will decrease the light path to shorten the depth of the projection system. The display screen could be flat or curved and it could have lambertian behaviour. The backside of the display screen can be covered with an anti-reflection coating, this could be a moth-eye anti-reflection coating, which is less dependent on the incident angle of the light than conventional anti-reflection coatings. The anti-reflection coating can reduce so-called ghost images that are created from reflections on the screen backside.

In embodiments of the present invention, the projectors could be connected to one or several light sources with one or several optical fibres. By keeping the light sources on another location, the occupied volume behind the display screen is further decreased.

In embodiments of the present invention, the components of the optical engine could be aligned along one axis. This will make the projector extend primarily in one direction. This direction can be chosen substantially parallel with the display screen. In this way the extension of the projectors in the direction perpendicular to the screen, can be decreased.

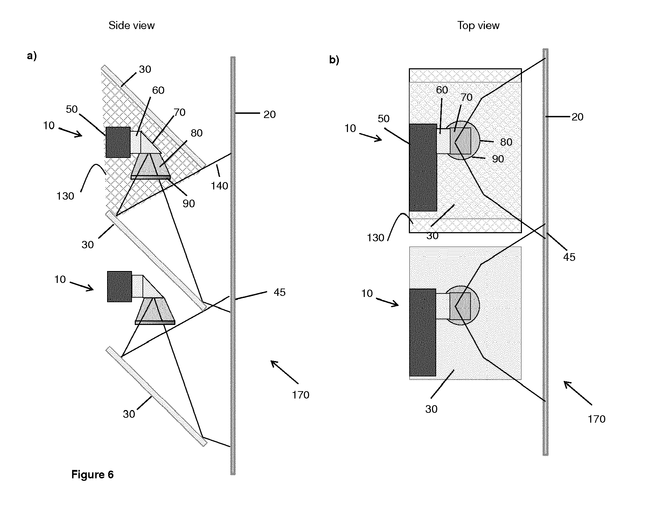

Embodiments of the present invention will now be described in detail with reference to the accompanying drawings. The terms used throughout this application are easily understood by reference to Figure 6, which illustrate a projector **10,** comprising an optical engine **50** followed by a projection lens assembly comprising a simple projection lens **60,** a means for light deviation **70** and an afocal lens system **80.** The entity comprising the optical engine **50** and the simple projection lens **60** can be obtained as a COTS component. Figure 6 shows a "projection system" **170** that would comprise at least one of a projector **10,** a display screen **20** and for each projector a gradation filter **90** and a front surface mirror **30.** The direction parallel to the extension of the screen **20** in Figure 6 a) will be designated as the "horizontal" direction of the system, while the direction parallel to the extension of the screen **20** in Figure 6 b) will be designated as the "vertical" direction of the system.

Figure 1 is a view illustrating a projector **10** and a display screen **20** and a folding front surface mirror **30.** The shaded areas indicate the lost space of the system.

Figure 2 is a view illustrating the use of optical blend filters **40** for light gradation. The projectors **10** projects the light on the optical blend filters **40** so that the combined image displayed on the display screen **20** will have a correct brightness level in the blend region **45.**

Figure 3 illustrates the interior of a commercial pocket projector.

Figure 4 a) and b) shows FIG.4 of patent US3409346 illustrating a projector **10** projecting onto a front surface mirror 12 for rear projection onto a display screen 13. (Numbering is according to US3409346.)

Figure 5 is a view illustrating one implementation of the invention. Figure 5 a) shows a side view of the optical engine **50,** the simple projection lens **60,** the means for light deviation **70,** the afocal lens system **80,** the front surface mirror **30** and the display screen **20.** Figure 5 also illustrates how the light source **110** may be connected to the rest of the system with an optical fibre **120.** Figure 5 b) shows the above mentioned system in a top view.

Figure 6 a) is a side view illustrating an implementation of the current invention, namely a projection system **170** comprising a multiple of projectors **10** and front surface mirrors **30** and a display screen **20.** The checked area at the upper projector illustrates a vertical cross section of the available space **130** between a mirror **30** and the edge of a light beam **140.** The space **130** will extend in the plane perpendicular to the paper plane. This plane is parallel to the plane of the display screen **20.** The planes are here substantially flat, but in principal they can be curved or of arbitrary shape. Figure 6 b) is the corresponding top view.

Figure 7 illustrates how reflections **150** on the backside of the screen **20** gives rise to secondary reflections **160** in the front surface mirrors **30** and forming so-called "ghost images" in the image plane.

The drawings are schematic illustrations and non-limiting and should not be interpreted to represent an exact scale of the physical objects. The present invention is not limited to the disclosed embodiments. In the whole description, the same drawing numerals are used for the same elements of the present invention throughout the text, while reprinted prior-art has kept its original numbering indicated with italics. It should be understood that the term "comprising" used in the claims should not be interpreted as being restricted to the means listed thereafter, but should be interpreted as specifying the presence of the stated features and does not preclude the presence or additions of one or more features. It should further be understood that the term lens is not restricted to a single lens element but can comprise a multiple of single lens elements forming a compound lens.

Images on large screens can be built up of the contribution from several projectors where their individual contributions will cover a subpart of the display screen.

The advantage of making use of blending is that stitches between individual display modules can be avoided, in case of LCD's these stitches are caused by the LCD bezels. Rear projection cubes limit the stitches to sub 1mm at the cost of a larger depth for reasonable screen sizes (>120cm) or at the cost of screen diagonal for reasonable display depths. Our approach combines reasonable screen sizes and reasonable display depths by making use of image blending.

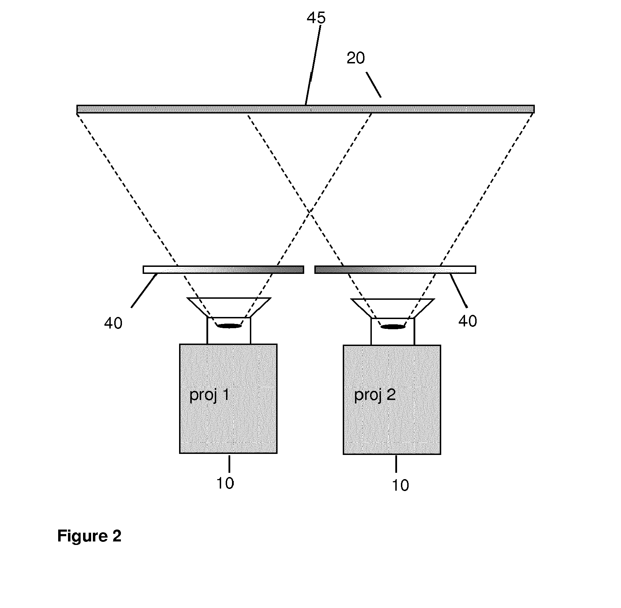

This will result in that two or more sub-images will slightly overlap, creating a blend region. The blend can be controlled electronically or optically (physically), called electronic or optical blending. For display techniques where black is not equivalent with a turned-off screen, such as e.g. LCD, black still contains some low level of brightness. In case of electronic blending, this low level of brightness will be enhanced with the number of images that are overlapped. With optical blending this low level of brightness is reduced by physical filters. Thus, the best contrast range is achieved with optical blend control. This can be done with optical gradation filters for example gradient neutral density filters, which ensure a correct output brightness level throughout the overlap. Figure 2 shows two projectors **10** where gradation filters **40** make sure that the blend region **45** on the display screen **20** has a homogeneous brightness distribution. It is of outmost importance that the blend region **45** is not discernible for the human eye.

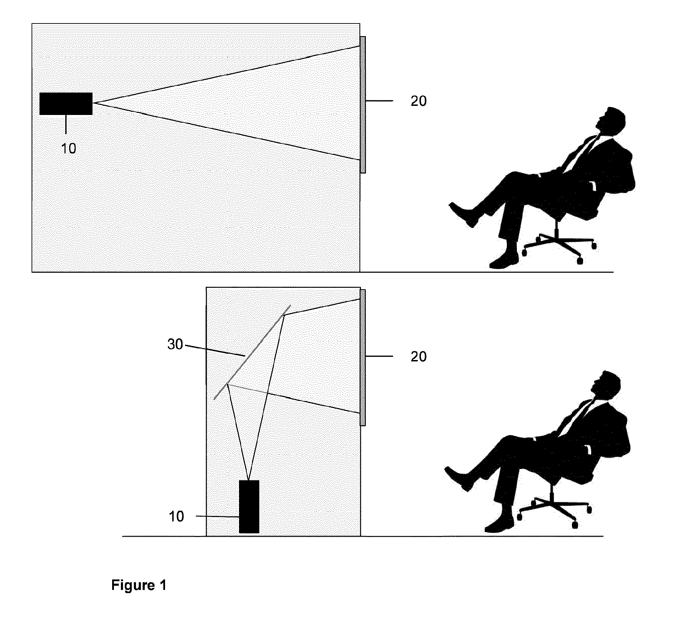

A first measure to decrease the depth of the projection system is by making use of front surface mirrors **30** illustrated in Figure 1. The light path exits the projector **10** and is folded by the front surface mirror **30** before reaching the screen **20.** In this way the distance between the projector **10** and the display screen **20** is shortened. The back side of a rear projection system has a multiple of horizontally and/or vertically tiled projectors with corresponding front surface mirrors. The light beams exiting the projectors and the front surface mirrors will delimit non-lit volumes. In order to minimize the projection system, the projectors need to fit within this available space, illustrated by the checked pattern **130** in Figure 6. A projector cannot interfere with a mirror or a light beam, but has to be moved away from the screen where there is more space available. In this way the projector system depth will increase.

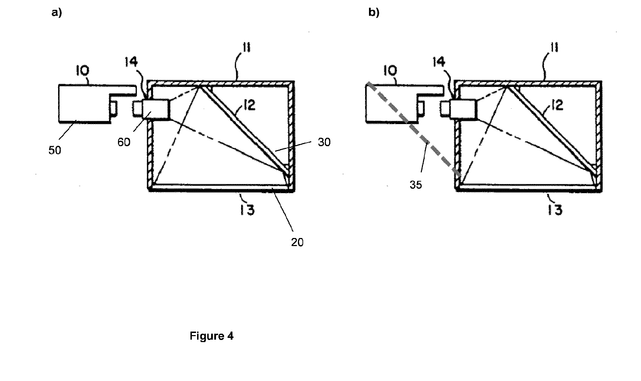

Figure 4 a) shows one implementation of US3409346 (FIG. 4) where a projector **10** passes an afocal lens system **14** and a folding mirror **12** before it hits the screen display **13.** However, this solution is confined in a box and can not provide a blended image if combined with a second likewise system. Even if the box walls are removed, the mirror of the subsystem to the left would have to be placed at the striped line in Figure 4 b) in order to get a blend between the images, and the projector would interfere with the mirror. Hence US3409346 does not teach how to implement a compact rear projection system involving blending.

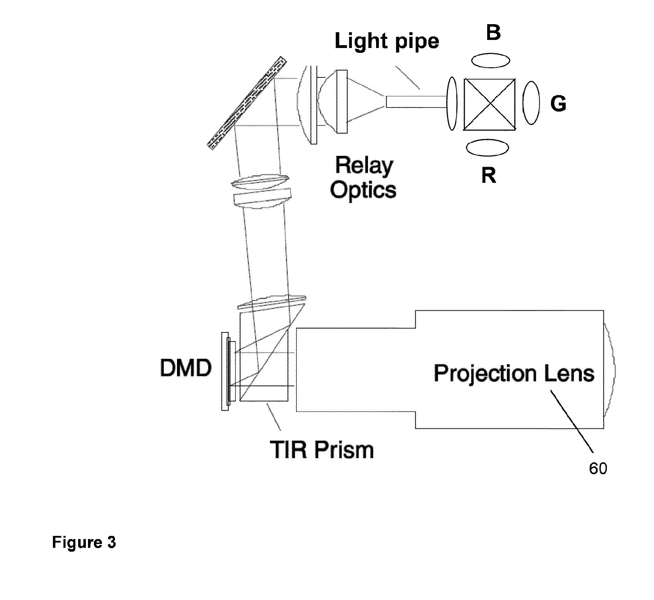

Current available pocket projectors give enough light output to provide a high quality image. A sufficient light output is at least **150** lumens. Table 1 shows the measures of some typical commercially available pocket projectors. This type of projector is compact and the housing is minimized in height while the width and length of the housing have longer, equally long sides so that they create a square footprint. These measures are chosen by the suppliers with the aim to "fit a pocket". However, the dimensions make the pocket projectors unsuitable for projection systems including blending. Figure 3 illustrates how the optical engine of a general pocket projector is arranged in a folded layout to create the square footprint. All components but the projection lens **60** comprises an optical engine. This shape is not optimal to fit within the available space **130.**

**Table 1 COTS projectors**

| Projector | Height (mm) | Width (mm) | Depth (mm) |
|---|---|---|---|
| Dell M110 | 36 | 104 | 105 |
| LG HW300T | 54 | 160 | 120 |
| BenQ Joybee GP2 | 52 | 140 | 130 |
| 3M MP410 | 44 | 107 | 100 |
| Vivitek Qumi Q2 | 32 | 160 | 100 |
| Viewsonic PLED W200 | 32 | 130 | 126 |

It might be considered to start from a pocket projector and design a shorter projection lens, but such a lens would be complex and expensive. The present invention is implemented with simple- and low-cost components.

A key property of projection systems is the ability to modulate the light intensity in order to create an image. The image is then scaled up to cover a subarea or the full area of a display screen. The light modulation providing the initial image can be done e.g. by a light valve. The ratio of the width to the height of this image will be preserved on the finally displayed image. One standard format is e.g. 16:9, so that the image is 16 units wide and 9 units high. For such a light valve, the hollow space **130** would elongate more in the horizontal direction than in the vertical direction. One aspect of the invention is therefore to make the projector **10** extend mainly in one direction and insert it along the longest axis in the available space **130.** The projection lens system will then be configured to orient the image in correctly on the display screen. For a light valve of 16:9 format, the axis of the longest side of the available space is in the horizontal direction. For a light valve providing a portrait oriented image, the corresponding direction would in principal be vertical. It should be understood that the means for light deviation should be interpreted as one or several devices. It is possible that the orientation of the projector is such that additional prisms or mirrors are required to get the desired orientation of the displayed image. Such devices may be added without deviating from the scope of the invention.

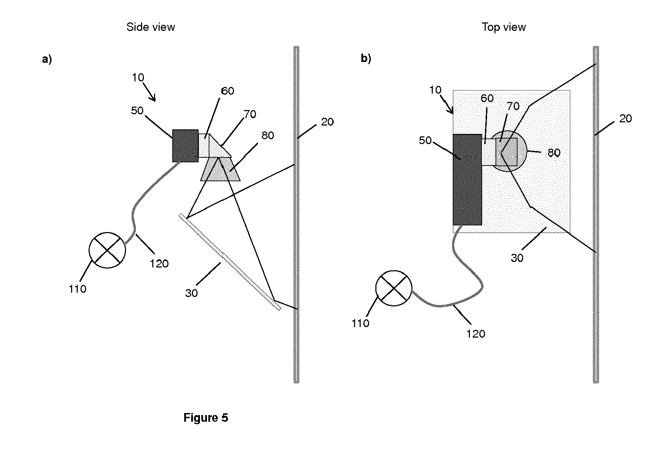

Figure 5 illustrates a side view of an aspect of the present invention for a single projector and Figure 5 b) shows the corresponding top view. The light exits the optical engine **50,** the simple projection lens **60** and enters the means for light deviation **70** and then the afocal lens system **80.** Then it deviates on the front surface mirror **30** to finally reach the display screen **20.** In the context of the invention, one advantageous embodiment could be using COTS components. The entity comprising the optical engine **50** and the simple projection lens **60** can be obtained as a COTS component; some examples are listed in Table 2. For the means of light deviation **70,** it may be beneficial to use a rectangular prism since it further decreases the optical path between exit of the projection lens and conversion lens. The light source **110** could be connected to the rest of the system with an optical fibre **120.** As can be seen, the optical engine **50** is aligned along one axis, and not folded as for the conventional projector in Figure 3. In this way the longest part of the projector can be placed in the direction of the most available space. Figure 5 illustrates an appropriate projector orientation for a 16:9 format.

Again exemplifying with a 16:9 format, Figure 6 illustrates a projector system with tiled projectors. Figure 6 a) illustrates a side view of two projectors **10** put on top of each other to provide two sub-images to the display screen **20.** Each projector has to fit in the available space **130** that is limited by the front surface mirror **30** and the edge of a light beam **140.** A side view cross section of **130** is indicated with a checked pattern for the upper projector. Figure 6 b) shows the top view of the same projector system. The available space **130** is indicated as the checked pattern, here placed behind the projector for clarity. The available space is larger in the horizontal direction than in the vertical direction. Figure 6 illustrates two tiled projectors in each direction, but any number of projectors can be added in vertical and horizontal direction without limitation. A particular advantage is to use a 16:9 format divided over 2 rows by 3 columns.

The system should be kept efficient by limiting the brightness roll-off. A large brightness roll-off results in a darkening of the image corners and the inhomogeneous light distribution would be detrimental for the blend quality. A projection system comprising a multiple of projected images could have a blend region involving e.g. four images. If the brightness roll-off is high, the blend region where the corners of the four images overlap will have a distorted brightness distribution. There will be a discernible deviation in light density in every sub-image corner with overlap, which would be easily seen by the human eye that is sensitive to repetitive patterns. Also the system becomes inefficient due to high light loss.

A Fresnel lens could manage to collimate a highly divergent light beam (e.g. from a short throw lens system) in order to reduce the brightness roll-off. Fresnel lenses depend of the angle of incidence of the light beam, so one such lens can not be designed to give a good collimation for two light beams from different directions. Thus, Fresnel lenses are not appropriate for a projection system that involves blending. The inventors have found that when using conventional lenses, in order to achieve a good blend quality it is necessary to limit the brightness roll-off to maximum 20%. The inventors conclude that the total throw ratio should not be lower than 0.7. They also conclude that the throw ratio should not be larger than 0.8 since the overall system depth then starts to approach that of conventional projection systems. Hence, if the throw ratio is kept between 0.7 and 0.8, the depth of the projection system can be significantly decreased while the displayed image is still of excellent quality.

Further, for rear projection displays there is an issue with ghost imaging. This arises from reflections on the backside of the screen that create secondary reflections in the folding mirror and eventually forms a ghost image.

The amount of secondary reflections increases with the obliqueness of the incident angle. If the projection system is not orthogonally set up there will be more oblique incident angles and more secondary reflections. For a curved display it is more difficult to maintain the orthogonal set up when arranging the projectors in a compact layout. Thus it is more common that a curved projection system is not orthogonal and that there are more oblique incident angles and more secondary reflections.

The risk to have secondary reflections is related to the angle of the front surface mirror with respect to the screen. If the angle of the mirror is 45° with respect to the screen, the risk to have secondary reflections is practically zero. In that case the optical axis of the light exiting the projection lens assembly is parallel to the screen and after reflection on the front surface mirror perpendicular. We may refer to this as an orthogonal alignment. For a curved display it is more difficult to maintain the orthogonal set up when arranging the projectors in a compact layout. Thus it is more common that a curved projection system gives lead to the phenomenon of secondary images.

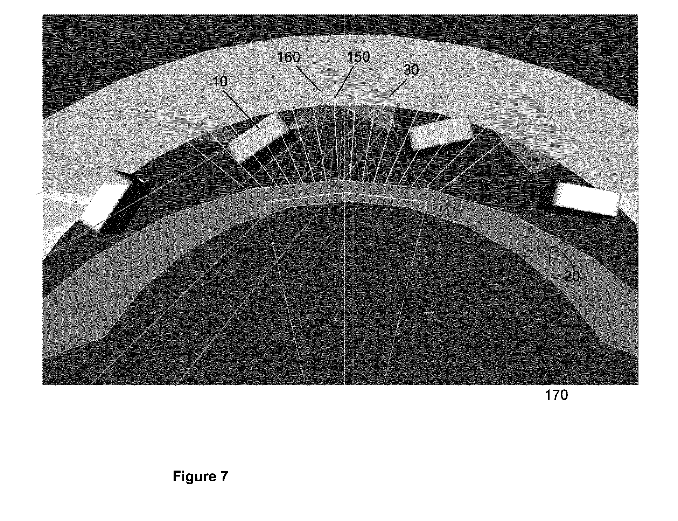

Figure 7 shows a (curved) display system involving a multiple of projectors **10.** The backside of the display screen **20** reflects light **150** towards the folding mirrors **30** which reflects them **160** towards the screen. By coating the backside of the screen with an anti-reflection, or anti-glare coating, this unwished effect can significantly be reduced. By using a so-called moth-eye anti-reflection coating we can further use the advantages of less angle dependency of such coatings. Mot-eye reflection films are scratch sensitive, but the film is put on the backside of the screen so the risk of mechanical deterioration is small.

An exemplary embodiment with a throw ratio between 0.7 and 0.8 could be implemented with the COTS components below.

**Table 2 COTS Projectors**

| Component | Output (lumen) | Throw ratio |
|---|---|---|
| Viewsonic PLED-W200 | 250 | 1.16 |
| BenQ-Joybee GP2 | 200 | 1.13 |
| ASUS P1 | 200 | 1.16 |

**Table 3 COTS conversion lenses**

| Component | Conversion factor |
|---|---|
| Ranox 0.66x, wide angle conversion lens | 0.66 |
| Sony VCL-0625S, wide angle converter lens | 0.6 |
| Canon WD-58H 58mm, wide angle converter lens | 0.7 |

In particular, the ASUS P1 projector together with the Raynox 0.66x wide angle conversion lens would give a throw ratio of about 0.75.

The light source may be separate red, green and blue light sources such as light emitting diodes, lasers or a combination of the former laser and phosphor, or may be a white light source combined with for instance a color wheel. If the light modulation is done by a light valve it could be e.g. a liquid crystal on silicon panel or a digital mirror device.

## Claims

1. A projector (10) comprising an optical engine (50), a projection lens (60), a means for light deviation (70), and an afocal lens system (80), wherein the projector (10) has a total throw ratio between 0.7 and 0.8.

2. The projector (10) according to claim 1 wherein a light source is connected to the rest of the system with an optical fiber.

3. The projector (10) according to any of the above claims wherein the optical engine is aligned along one axis.

4. The projector (10) according to any of the above claims wherein the output of the optical engine (50) is at least 150 lumen.

5. The projector (10) according to any of the above claims wherein the means for light deviation (70) is a mirror or a prism or a rectangular prism or any combination of them.

6. The projector (10) according to any of the above claims wherein the means for light deviation (70) deviate the light from its optical path 45-70 degrees.

7. The projector (10) according to any of the above claims wherein the afocal lens system (80) is a conversion lens.

8. A projection assembly comprising a projector (10) according to any of the preceding claims followed by a means for light gradation (90) and a front-surface mirror (30).

9. The projection assembly according to claim 8, wherein the projector (10) substantially extends along a direction parallel to the plane of the projected image, and wherein the projector (10), the means for light gradation (90), and the front-surface mirror (30) are shaped and arranged in such a way as to leave open a space which could be occupied without interference by a similar projection assembly (10) in an image-blending configuration.

10. A display system (170) comprising at least one projection assembly (10, 90, 30) according to claim 9 and a display screen (20).

11. The display system (170) according to claim 10 where the front surface mirrors (30) and the light beams delimit available spaces which extends the most in a direction parallel to the display screen, wherein each projector (10) is designed with an elongated shape to fit in this space.

12. The display system (170) according to any of claims 10-11 wherein a projection lens assembly modifies the orientation of the image on the display screen (20).

13. The display system (170) according to any of claims 10-12 where all projectors (10) are connected to one or a multiple of light sources, and the light source or multiple of light sources is connected to the projectors with one or a multiple of optical fibers.

14. The display system (170) according to any of claims 10-12 wherein the display screen (20) is flat or curved.

15. The display system (170) according to any of claims 10-14 where the means for light gradation (90) is an optical blend filter or a continuous tone blend filter.

16. The display system (170) according to any claims 10-15 wherein the surface of the display screen (20) first receiving the projector (10) light, is covered with an anti-reflection coating or a moth-eye anti-reflection coating.
